# EUROPEAN PATENT APPLICATION

(11) **EP 2 059 062 A1**
(43) Date of publication of application: **13.05.2009**
(21) Application number: 08721794.9
(22) Date of filing: 11.03.2008
(51) Int. Cl.: H04Q 7/38, H04L 12/56

(54) **MOBILE COMMUNICATION SYSTEM AND COMMUNICATION CONTROL METHOD**

(30) Priority: 12.03.2007 JP 2007061935
(71) Applicant: Nec Corporation, Tokyo 108-8001 (JP)
(72) Inventor: TAKANO, Yusuke, Tokyo 108-8001 (JP); TAMURA, Toshiyuki, Tokyo 108-8001 (JP)
(74) Representative: Sieckmann, Dirk Christoph
(86) International application number: PCT/JP2008/054378
(87) International publication number: WO 2008/126565

(57) **Abstract**

A mobile communication system for connecting a terminal to service networks includes a wireless access network device, a gateway device, and a mobility management device. The wireless access network device connects to the terminal. The gateway device establishes a plurality of tunnels connecting the terminal to the service networks and switches the plurality of tunnels according to a request. The mobility management device sends to the gateway device the request to collectively switch the plurality of tunnels.

## Description

### Technical Field

The present invention relates to a mobile communication system in which a terminal can be connected to a plurality of service networks at the same time.

### Background Art

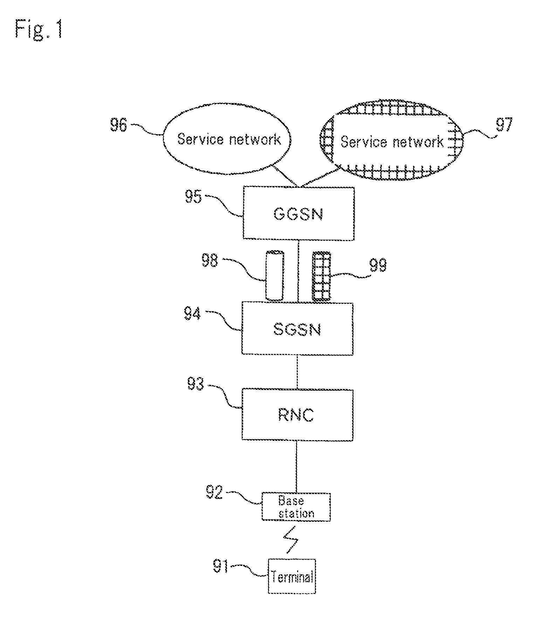

Figure 1 is a block diagram showing a configuration of a mobile communication system in which one terminal can be connected to a plurality of service networks at the same time. Referring to Figure 1, the mobile communication system has GGSN (Gateway GPRS (General Packet Radio Service) Support Node) 95, SGSN (Serving GPRS Support Node) 94, RNC (Radio Network Controller) 93, and base station 92. GGSN 95 and SGSN 94 belong to a core network, and RNC 93 and base station 92 belong to a wireless access network.

GGSN 95 is a gateway device connected to two service networks 96 and 97, and between the mobile communication system and service networks 96 and 97. Service networks 96 and 97 are networks which provide packet service.

SGSN 94 is a node device for providing a GPRS service, connects to RNC 92 connected to terminal 91, and also establishes tunnels 98 and 99 between SGSN 94 and GGSN 95 to allow terminal 91 to connect to service networks 96 and 97.

RNC 93 is a controller for controlling base station 92, and typically controls a plurality of base stations 92. RNC 93 sets a call by performing call processing between itself and both the core network and terminal 91.

Base station 92 wirelessly connects to terminal 91 and relays communications from terminal 91.

In the state of Figure 1, terminal 91 is receiving connection services from both service networks 96 and 97. At this time, for the purpose of the connection of terminal 91, GTP (GPRS Tunneling Protocol) tunnels 98 and 99 are established for connecting to service networks 96 and 97, respectively, between SGSN 94 and GGSN 95.

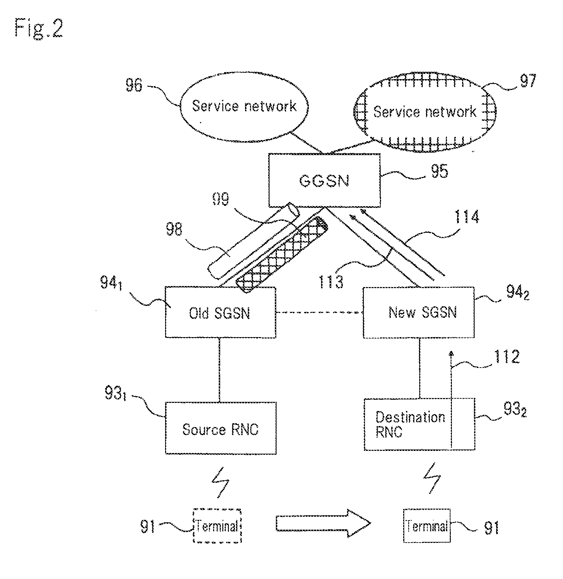

Figure 2 is a diagram for describing an operation of the mobile communication system when terminal 91 shown in Figure 1 has moved and thereby a change is made to SGSN 94. Although, in Figure 2, the base station is omitted for the sake of clarity, suppose that terminal 91 is connected to RNC 93 via base station 92 (not shown) as shown in Figure 1. Referring to Figure 2, terminal 91 has moved from source RNC 93₁ to destination RNC 93₂. At this time, signal 112 indicating the movement of terminal 91 is sent from moved terminal 91 or destination RNC 93₂ to new SGSN 94₂.

Subsequently, new SGSN 94₂ sends to GGSN 95 switching request signal 113 for switching GTP tunnel 98 for service network 96 and switching request signal 114 for switching GTP tunnel 99 for service network 97.

Having received two switching request signals 113 and 114, GGSN 95 switches respective GTP tunnels 98 and 99 from old SGSN 94₁ to new SGSN 94₂.

### Disclosure of the Invention

As described using Figure 2, when terminal 91 which is connected to two service networks 96 and 97 has moved, new SGSN 94₂ containing destination RNC 93₂ sends two switching request signals to the same GGSN 95 for one movement of one terminal 91. In order to make a request to the same GGSN 95 for switching tunnels for the same terminal 91, it is quite wasteful to send a plurality of switching request signals for each tunnel.

In addition, when each request signal is sent for each tunnel, a status conflict will occur between tunnels if one of the request signals is lost. In this case, a system design in which such a status conflict is taken into account is required, making the device functions more complicated.

An object of the present invention is to provide a mobile communication system capable of performing tunnel switching associated with the movement of a terminal efficiently and easily.

In order to achieve the object described above, a mobile communication system according to one aspect of the present invention is a mobile communication system for connecting a terminal to service networks, comprising:
a wireless access network device for connecting to the terminal;
a gateway device for establishing a plurality of tunnels connecting the terminal to the service networks and for switching the plurality of tunnels as requested; and
a mobility management device for sending to the gateway device a request to collectively switch the plurality of tunnels.

A communication control method according to one aspect of the present invention is a communication control method for connecting a terminal to service networks, comprising:
establishing a plurality of tunnels connecting the terminal to the service networks;
sending a request to collectively switch the plurality of tunnels; and
collectively switching the plurality of tunnels according to the request.

### Brief Description of the Drawings

Figure 1 is a block diagram showing a configuration of a mobile communication system in which one terminal can be connected to a plurality of service networks at the same time;
Figure 2 is a diagram for describing an operation of the mobile communication system when terminal 1 shown in Figure 1 has moved and thereby a change is made to SGSN;
Figure 3 is a block diagram showing a configuration of a mobile communication system according to a first exemplary embodiment;
Figure 4 is a diagram for describing an operation of the mobile communication system when terminal 1 has moved according to the first exemplary embodiment;
Figure 5 is a flow chart showing an operation of new SGSN 4₂ for processing a tunnel switching request;
Figure 6 is a diagram for describing an operation of a mobile communication system when terminal 1 has moved according to a second exemplary embodiment;
Figure 7 is a diagram for describing a configuration of a mobile communication system according to a third exemplary embodiment and an operation thereof when a terminal has moved;
Figure 8 is a diagram for describing a configuration of a mobile communication system according to a fourth exemplary embodiment and an operation thereof when a terminal has moved; and
Figure 9 is a diagram for describing a configuration of a mobile communication system according to a fifth exemplary embodiment and an operation thereof when a terminal has moved.

### Best Mode for Carrying Out the Invention

An exemplary embodiment will be described in detail with reference to the drawings.

### (First exemplary embodiment)

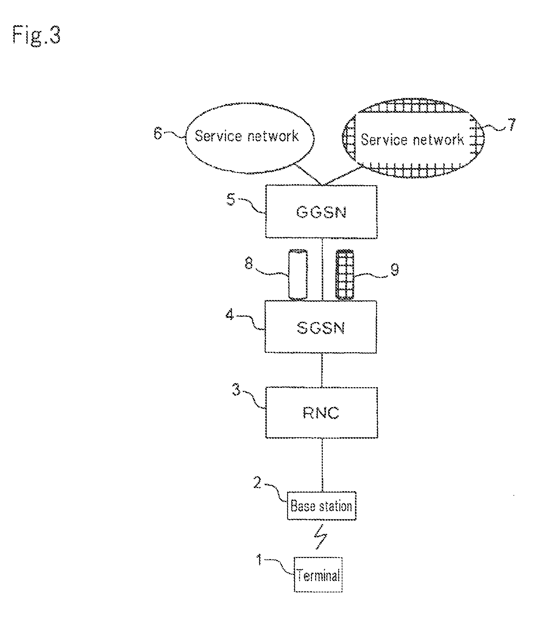

Figure 3 is a block diagram showing a configuration of a mobile communication system according to a first exemplary embodiment. In this figure, there is shown a mobile communication system in which one terminal can be connected to a plurality of service networks at the same time.

Referring to Figure 3, the mobile communication system has GGSN 5 (Gateway GPRS (General Packet Radio Service) Support Node), SGSN 4 (Serving GPRS Support Node), RNC 3 (Radio Network Controller), and base station 2. GGSN 5 and SGSN 4 belong to a core network, and RNC 3 and base station 2 belong to a wireless access network.

GGSN 5 is a gate device connected to two service networks 6 and 7, serves to connect the mobile communication system to service networks 6 and 7. Service networks 6 and 7 are networks which provide packet service.

SGSN 4 is a node device for providing a GPRS service, connects to RNC 2 that is connected to terminal 1, and also establishes tunnels 8 and 9 between SGSN 4 and GGSN 5 to allow terminal 1 to connect to service networks 6 and 7.

RNC 3 is a controller for controlling base station 2, and typically controls a plurality of base stations 2. RNC 3 sets a call by performing call processing between itself and both the core network and terminal 1.

Base station 2 wirelessly connects to terminal 1 and relays communications from terminal 1.

In the state of Figure 3, terminal 1 is receiving connection services from both service networks 6 and 7. At this time, for the purpose of connecting terminal 1, GTP (GPRS Tunneling Protocol) tunnels 8 and 9 are established for making connections to service networks 6 and 7, respectively, between SGSN 4 and GGSN 5.

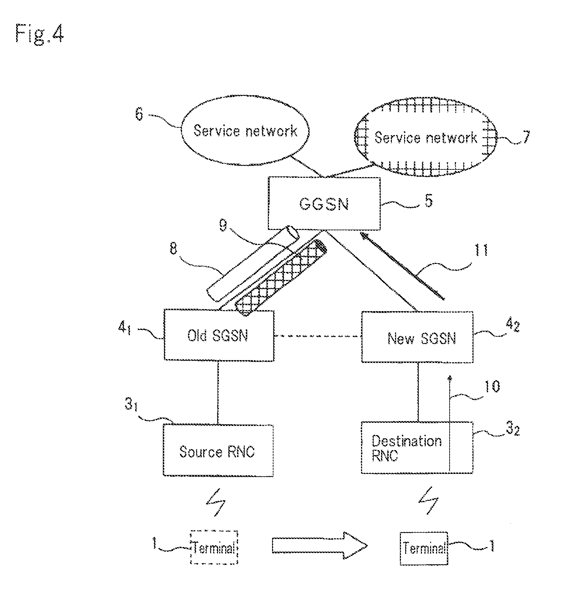

Figure 4 is a diagram for describing an operation of the mobile communication system when terminal 1 has moved according to the first exemplary embodiment. Although, in Figure 4, as in Figure 2, the base station is omitted for the sake of clarity, suppose that terminal 1 is connected to RNC 3 via base station 2 (not shown) as shown in Figure 3. Referring to Figure 4, terminal 1 has moved from source RNC 3₁ to destination RNC 3₂. Accordingly, a change of connection from old SGSN 4₁ to new SGSN 4₂ is made.

At this time, signals associated with the movement are sent/received between new SGSN 4₂, destination RNC 3₂, and terminal 1. Upon receiving predetermined signal 10, new SGSN 4₂ starts processing a tunnel switching request. Predetermined signal 10 for starting processing of a tunnel switching request includes a route area update signal from terminal 1 or a relocation completion signal from destination RNC 3₂,

New SGSN 4₂ also obtains tunnel information about tunnels established for terminal 1 as a PDP (Packet Data Protocol) context from old SGSN 4₁. For example, new SGSN 4₂ may send a PDP context request signal to old SGSN 4₁ and then old SGSN 4₁ may send a PDP context as the response. Alternatively, old SGSN 4₁ may notify new SGSN 4₂ of the tunnel information autonomously by means of a transfer relocation request signal.

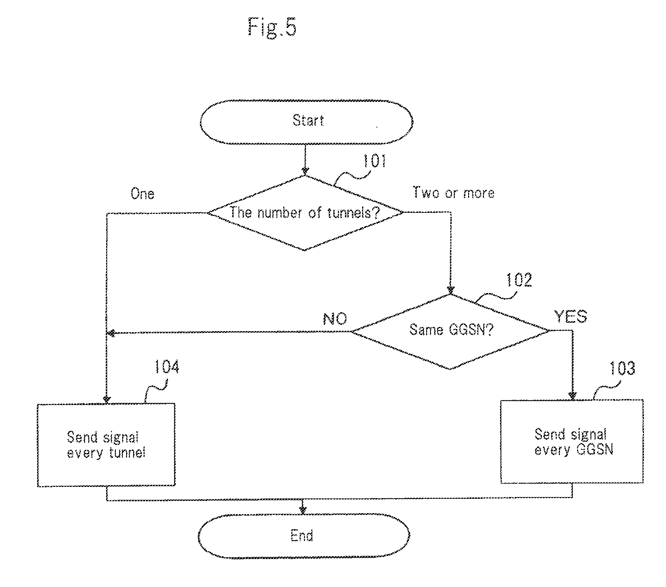

Figure 5 is a flow chart showing an operation of new SGSN 4₂ for processing a tunnel switching request. New SGSN 4₂ obtains the number of tunnels to be switched from the tunnel information obtained from old SGSN 4₁ and determines whether or not the number of tunnels is two or more (step 101). If the number of tunnels is two or more, new SGSN 4₂ then determines whether or not there are two or more GTP tunnels between new SGSN 4₂ and the same GGSN 5 (step 102).

As a result of the determination of step 102, if there are two or more GTP tunnels between new SGSN 4₂ and the same GGSN 5, new SGSN 4₂ sends to GGSN 5 switching request signal 11 including a request to switch the plurality of GTP tunnels from old SGSN 4₁ to new SGSN 4₂ (step 103).

The switching request signal, which includes a pair of TEIDs (Tunnel Endpoint Identifiers) for the plurality of GTP tunnels to be switched, is sent on one update PDP context request signal.

If the number of GTP tunnels to be switched is one or less as a result of the determination of step 101 or if there are no two or more GTP tunnels between new SGSN 4₂ and the same GGSN 5 as a result of the determination of step 102, new SGSN 4₂ sends each switching request signal for switching each GTP tunnel to GGSN 5 corresponding to each GTP tunnel (step 104).

Having received the switching request signal sent from new SGSN 4₂ in this way, GGSN 5 analyzes the switching request signal and then switches the GTP tunnels indicated by the TEID from old SGSN 4₁ to new SGSN 4₂.

According to the exemplary embodiment, as described above, when SGSN 4 needs to be switched due to the movement of terminal 1, new SGSN 4₂ makes a request to GGSN 5 for collectively switching the plurality of GTP tunnels between the same GGSN 5 and SGSN 4 for the same terminal 1 by means of one switching request signal. Therefore, the amount of communications between new SGSN 4₂ and GGSN 5 is reduced, thereby allowing the switching of GTP tunnels with increased line performance. The time requesting for switching the GTP tunnels is also reduced because the switching of the plurality of GTP tunnels can be requested by one switching request signal. In addition, the functions of GGSN 5 and SGSN 4 are simplified because the status of GTP tunnel switching requests from SGSN 4 to GGSN 5 is always the same between tunnels, resulting in simple switching operations.

### (Second exemplary embodiment)

A mobile communication system of a second exemplary embodiment can take a Direct Tunnel extended configuration which establishes GTP tunnels between an RNC and a GGSN directly. The configuration of a mobile communication system of the exemplary embodiment is the same as that of the first exemplary embodiment shown in Figure 3. However, GTP tunnels 8 and 9 are established between RNC 3 and GGSN 5. The operation of the mobile communication system of the exemplary embodiment is the same as that of the first exemplary embodiment except for the operation of establishing the Direct Tunnel extended configuration.

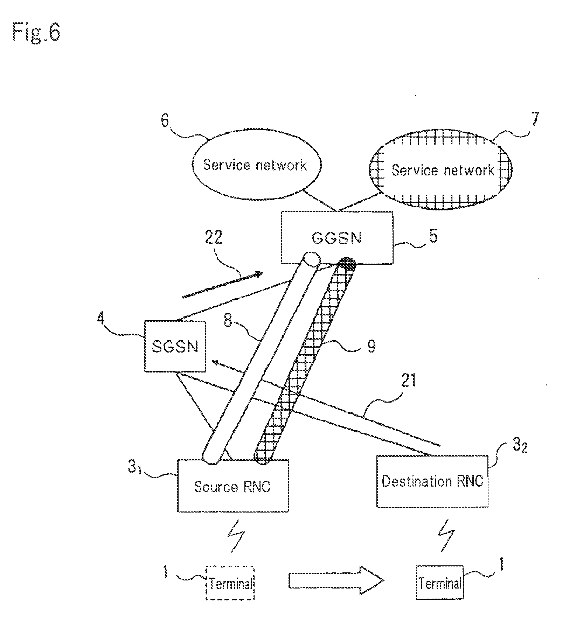

Figure 6 is a diagram for describing an operation of a mobile communication system when terminal 1 has moved according to the second exemplary embodiment. Although, in Figure 6, the base station is omitted for the sake of clarity, suppose that terminal 1 is connected to RNC 3 via base station 2 (not shown) as in Figure 4. Referring to Figure 6, terminal 1 is connected to a plurality of service networks 6 and 7 using one GGSN 5. In this status, terminal 1 is moving from source RNC 3₁ to destination RNC 3₂. Accordingly, it becomes necessary to switch GTP tunnels 8 and 9 established between source RNC 3₁ and GGSN 5 to the location between destination RNC 3₂ and GGSN 5.

At this time, signals associated with the movement are sent/received between SGSN 4, destination RNC 3₂, and terminal 1. Upon receiving movement completion notification 21 of terminal 1 from destination RNC 3₂, SGSN 4 starts processing a tunnel switching request.

The processing of a tunnel switching request is the same as that of the first exemplary embodiment shown in Figure 5. However, SGSN 4 may use tunnel information held by SGSN 4 itself for the determination of step 101. With the processing of a tunnel switching request according to the second exemplary embodiment, if there is a plurality of GTP tunnels that need to be switched for the same GGSN 5, SGSN 4 will make a request to switch the plurality of GTP tunnels by means of one switching request signal 22.

Since SGSN 4 typically contains a plurality of RNCs 3, using a Direct Tunnel extended configuration which establishes GTP tunnels between RNC 3 and GGSN 5 leads to an increase in the number of switching GTP tunnels compared to establishing GTP tunnels between SGSN 4 and GGSN 5. Therefore, the exemplary embodiment can obtain more advantages because of the Direct Tunnel extended configuration.

### (Third exemplary embodiment)

In a third exemplary embodiment, a SAE (System Architecture Evolution) system which extends the GPRS system will be exemplified.

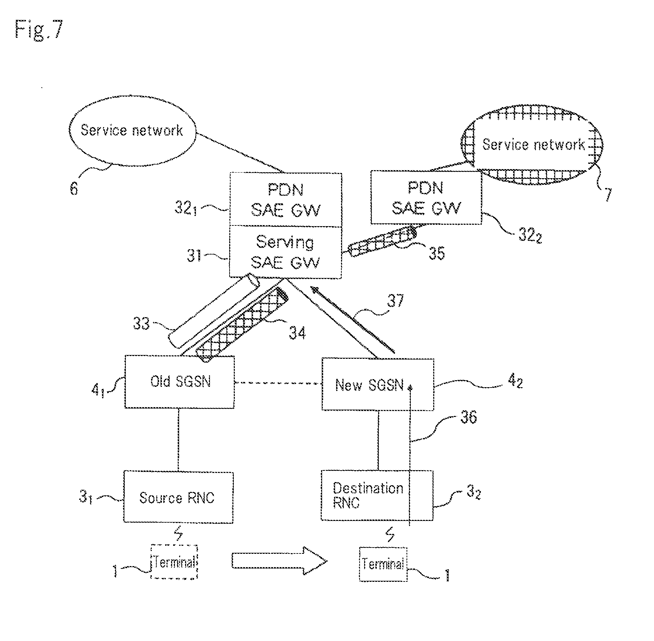

Figure 7 is a diagram for describing a configuration of a mobile communication system according to the third exemplary embodiment and an operation thereof when a terminal has moved. Although, in Figure 7, the base station is omitted for the sake of clarity, suppose that terminal 1 is connected to RNC 3 via base station 2 (not shown) as in Figure 4. Referring to Figure 7, old SGSN 4₁ and new SGSN 4₂ are connected to serving SAE GW 31.

A mobile communication system of the third exemplary embodiment has serving SAE GW 31 and PDN SAE GWs 32₁ and 32₂, instead of GGSN 5 according to the first exemplary embodiment shown in Figure 3. RNC 3 and base station 2 (not shown) are included in a UTRAN (Universal Terrestrial Radio Access Network), and SGSN 4, serving SAE GW 31 and PDN SAE GWs 32₁ and 32₂ are included in a core network. In the SAE system, accessing from the UTRAN is connected to serving SAE GW 31 from SGSN 4 through GTP tunnels.

Serving SAE GW 31 and PDN SAE GW 32₁ may be integrally configured, and serving SAE GW 31 is connected to service network 6 via PDN SAE GW 32₁. In the example of the figure, since serving SAE GW 31 and PDN SAE GW 32₁ are integrally configured, there is no GTP tunnel established between serving SAE GW 31 and PDN SAE GW 32₁.

Serving SAE GW 31 is also connected to service network 7 via PDN SAE GW 32₂, GTP tunnel 35 is established between serving SAE GW 31 and PDN SAE GW 32₂.

Serving SAE GW (Gateway) 31 is a device for terminating GTP tunnels 33 and 34 between serving SAE GW 31 and SGSN 4.

PDN (Packet Domain Network) SAE GWs 32₁ and 32₂ are gate devices for connecting to service networks 6 and 7.

Referring to Figure 7, terminal 1 has moved from source RNC 3₁ to destination RNC 3₂. Accordingly, a change of the connection from old SGSN 4₁ to new SGSN 4₂ is made.

At this time, signals associated with the movement are sent/received between new SGSN 4₂, destination RNC 3₂, and terminal 1. Upon receiving movement completion notification 36 of terminal 1 from destination RNC 3₂, new SGSN 4₂ starts processing of a tunnel switching request.

The processing of a tunnel switching request is the same as that of the first exemplary embodiment shown in Figure 5. In the SAE system, when one terminal 1 connects to a plurality of service networks 6 and 7, tunnels are consolidated into one serving SAE GW 31. After the consolidation, tunnel 35 will be established between serving SAE GW 31 and PDN SAE GW 32₂. If there is a plurality of tunnels in serving SAE GW 31, new SGSN 4₂ sends to serving SAE GW 31 one switching request signal 37 for making a request to switch the plurality of tunnels.

In the SAE system, when one terminal 1 connects to a plurality of service networks 6 and 7, tunnels are consolidated into one serving SAE GW 31. Therefore, in the third exemplary embodiment, it is more likely that a plurality of tunnel switching requests may be consolidated into one switching request signal than that in the first exemplary embodiment so that more advantages can be obtained.

### (Fourth exemplary embodiment)

In a fourth exemplary embodiment, the SAE system shown in the third exemplary embodiment, to which the Direct Tunnel extended configuration shown in the second exemplary embodiment can be applied will be exemplified.

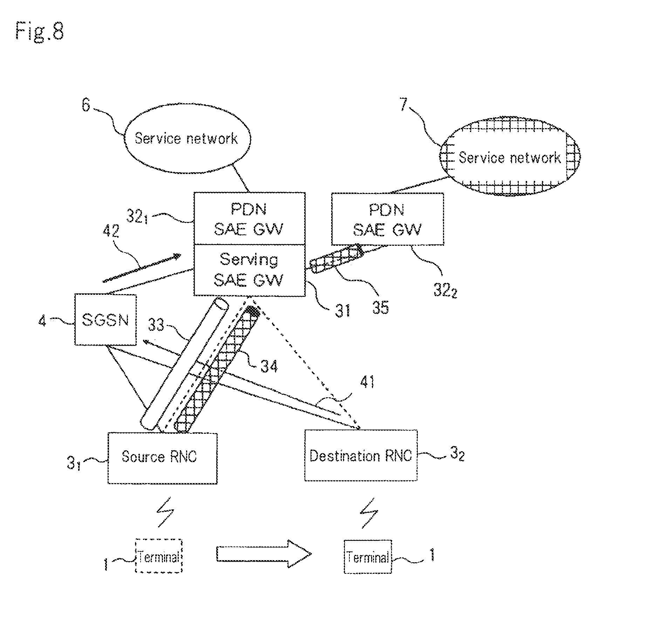

Figure 8 is a diagram for describing a configuration of a mobile communication system according to the fourth exemplary embodiment and an operation thereof when a terminal has moved. Although, in Figure 8, the base station is omitted for the sake of clarity, suppose that terminal 1 is connected to RNC 3 via base station 2 (not shown) as in Figure 4. Referring to Figure 8, tunnels 33 and 34 are established between RNC 3 and serving SAE GW 31. The operation of a mobile communication system of the exemplary embodiment is the same as that of the third exemplary embodiment except for the operation for establishing the Direct Tunnel extended configuration.

Referring to Figure 8, terminal 1 has moved from source RNC 3₁ to destination RNC 3₂. At this time, signals associated with the movement are sent/received between SGSN 4, destination RNC 3₂, and terminal 1. Upon receiving movement completion notification 41 of terminal 1 from destination RNC 3₂, SGSN 4 starts processing a tunnel switching request.

The processing of a tunnel switching request is the same as that of the first exemplary embodiment shown in Figure 5. In the SAE system, when one terminal 1 connects to a plurality of service networks 6 and 7, tunnels are consolidated into one serving SAE GW 31. After consolidation, tunnel 35 will be established between serving SAE GW 31 and PDN SAE GW 32₂.

In the exemplary embodiment, since the Direct Tunnel extended configuration is applied, SGSN 4 may use tunnel information held by SGSN 4 itself.

If there is a plurality of tunnels in serving SAE GW 31, SGSN 4 sends to serving SAE GW 31 one switching request signal 42 for making a request to switch the plurality of tunnels.

Also in the exemplary embodiment, as with the third exemplary embodiment, it is more likely that a plurality of tunnel switching requests may be consolidated into one switching request signal than that in the first exemplary embodiment so that more advantages can be obtained. Moreover, in the exemplary embodiment, the same advantage as that of the second exemplary embodiment can also be obtained.

### (Fifth exemplary embodiment)

In a fifth exemplary embodiment, a SAE system is exemplified in which an RNC and a base station (e NB (evolved Node-B)) are integrally configured and a MME (Mobile Management Entity) is provided instead of a SGSN. An eNB is included in a EUTRAN (Evolved UTRAN).

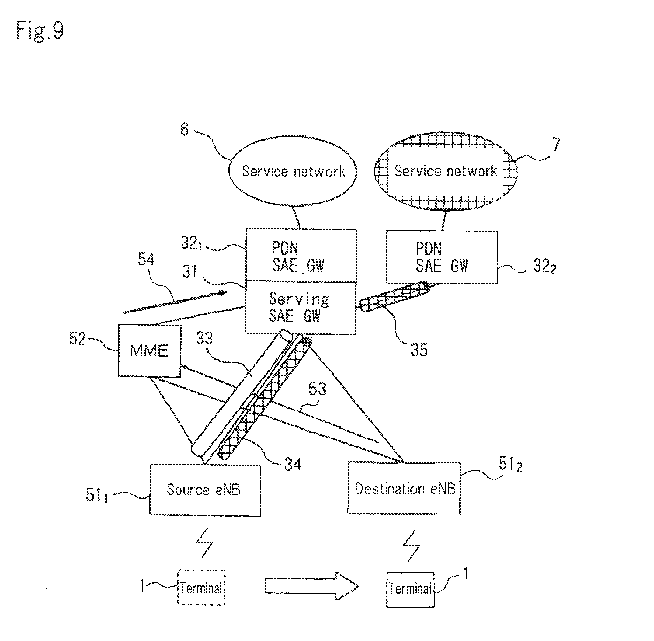

Figure 9 is a diagram for describing a configuration of a mobile communication system according to the fifth exemplary embodiment and an operation thereof when a terminal has moved. Referring to Figure 9, the configuration of the mobile communication system of the fifth exemplary embodiment differs from the system shown in Figure 8 in that base station 2 and RNC 3 shown in Figure 3 are integrally configured as eNB 51, and there is MME 52 instead of SGSN 4 shown in Figure 8. Since MME 52 does not have a function for processing a user plane, tunnels are established between eNB 51 and serving SAE GW 31 directly, as with the Direct Tunnel extended configuration shown in Figure 8.

Referring to Figure 9, terminal 1 has moved from source eNB 51₁ to destination eNB 51₂. At this time, signals associated with the movement are sent/received between MME 52, destination eNB 51₂, and terminal 1. Upon receiving movement completion notification 53 of terminal 1 from destination eNB 51₂, MME 52 starts processing a tunnel switching request.

The processing of a tunnel switching request is the same as that of the first exemplary embodiment shown in Figure 5. In the SAE system, when one terminal 1 connects to a plurality of service networks 6 and 7, tunnels are consolidated into one serving SAE GW 31. After consolidation, tunnel 35 will be established between serving SAE GW 31 and PDN SAE GW 32₂.

Since the SAE system of the exemplary embodiment has a configuration in which tunnels are established between eNB 51 and serving SAE GW 31, MME 52 may use tunnel information which is held by MME 52 itself.

If there is a plurality of tunnels in serving SAE GW 31, MME 52 sends to serving SAE GW 31 one switching request signal 54 for making a request to switch the plurality of tunnels.

In the exemplary embodiment, the same advantage as that of the fifth exemplary embodiment can be obtained.

Hereinbefore, although the present invention has been described with reference to the exemplary embodiments, the present invention is not limited to the exemplary embodiments. It is also possible to combine or incorporate the descriptions of each exemplary embodiment. Various modifications, which those skilled in the art may appreciate, can be made within the scope of the invention to the configuration or to the details of the present invention defined in the claims.

This application claims benefit of priority based on Japanese Patent Application No. 2007-061935 filed on March, 12, 2007, the disclosure of which is hereby incorporated by reference in its entirety.

## Claims

1. A mobile communication system for connecting a terminal to service network, comprising:
a wireless access network device for connecting to the terminal;
a gateway device for establishing a plurality of tunnels connecting the terminal to the service networks and for switching the plurality of tunnels according to a request; and
a mobility management device for sending to the gateway device a request to collectively switch the plurality of tunnels.

2. The mobile communication system according to claim 1, wherein the request comprises a plurality of TEIDs (Tunnel Endpoint Identifiers) for the plurality of tunnels.

3. The mobile communication system according to claim 1, wherein the mobility management device is a MME (Mobile Management Entity).

4. The mobile communication system according to claim 1, wherein the gateway device is a serving gateway.

5. The mobile communication system according to claim 1, wherein the access network device further comprises an eNB (evolved Node-B) for connecting to the terminal.

6. The mobile communication system according to claim 5, wherein the tunnels are established between the gateway device and the eNB.

7. A communication control method for connecting a terminal to service networks, comprising:
establishing a plurality of tunnels connecting the terminal to the service networks;
sending a request to collectively switch the plurality of tunnels; and
collectively switching the plurality of tunnels according to the request.

8. The communication control method according to claim 7, wherein the request comprises a plurality of TEIDs (Tunnel Endpoint Identifiers) for the plurality of tunnels.
